# DEMANDE DE BREVET EUROPEEN

(11) **EP 1 860 221 A2**
(43) Date de publication de la demande: **28.11.2007**
(21) Numéro de dépôt: 07370008.0
(22) Date de dépôt: 13.04.2007
(51) Int. Cl.: D04H 18/00

(54) **Aiguilleteuse dont la frequence d'au moins un mode propre de vibration est reglable**

(30) Priorité: 24.05.2006 FR 0604383
(71) Demandeur: Asselin-Thibeau, 59200 Tourcoing (FR)
(72) Inventeur: Noël, Jean-François, 76000 Rouen (FR); Louis, François, 27370 La Saussaye (FR)
(74) Mandataire: Matkowska, Franck

(57) **Abrégé**

On règle manuellement ou automatiquement la fréquence d'un mode propre de vibration d'une aiguilleteuse (1), en fonction de la vitesse d'aiguilletage, de manière à réduire l'amplitude des vibrations de l'aiguilleteuse en cours d'aiguilletage. Ce réglage est de préférence obtenu par modification de la masse ou de la raideur de la structure de l'aiguilleteuse, ou par modification de l'inertie en rotation d'une ligne d'arbre de l'aiguilleteuse.

## Description

### Domaine technique

La présente invention concerne la réduction des amplitudes de vibrations d'une aiguilleteuse utilisée pour consolider mécaniquement un produit fibreux, notamment un produit non-tissé, feutre de papeterie,....

### Art antérieur

Dans le domaine textile de la production de non-tissés, il est usuel d'utiliser une aiguilleteuse pour consolider mécaniquement une bande non-tissé (monocouche ou multicouche) de fibres ou une nappe non-tissé de fibres issue par exemple d'un étaleur-nappeur. Dans le domaine de la papeterie, on utilise également des aiguilleteuses pour consolider des feutres de papeterie.

De manière usuelle, dans une aiguilleteuse le produit fibreux passe entre un support d'aiguilletage et un débourreur constitués le plus souvent par deux plaques perforées, généralement en acier. Dans certains cas, le support d'aiguilletage et le débourreur peuvent également être constitués par des structures à lamelles, ou le support d'aiguilletage peut comporter des brosses. En cours d'aiguilletage, le produit fibreux est traversé par des aiguilles parallèles montées sur un support, qui est communément désigné planche à aiguilles, et qui est animé d'un mouvement alternatif parallèle à la direction longitudinale des aiguilles et généralement vertical. Ces différents éléments (support d'aiguilletage, débourreur, planche à aiguilles et moyens d'entraînement motorisé pour le mouvement alternatif des aiguilles) sont supportés par un bâti porteur généralement de type mécano soudé et en acier. Pendant le mouvement de pénétration des aiguilles, les fibres sont entrelacées entre elles par le mouvement des aiguilles, ce qui permet de consolider la structure du produit fibreux.

Dans un premier type connu d'aiguilleteuse dite « simple frappe », et décrite par exemple dans la demande de brevet internationale WO96/21763 ou dans la demande de brevet européen EP 1 384 804, le produit fibreux est aiguilleté par pénétration des aiguilles dans une seule de ses deux faces. Dans un autre type connu d'aiguilleteuse dite « double frappe » et décrite par exemple dans la demande de brevet internationale WO 94/12715, le produit fibreux est aiguilleté par pénétration des aiguilles dans ses deux faces. Une aiguilleteuse « double frappe » met en oeuvre deux ensembles d'aiguilles disposés de part et d'autre du produit fibreux. Ces deux ensembles peuvent être en vis-à-vis l'un de l'autre ou être décalés.

Une aiguilleteuse comporte, comme toute machine tournante complexe, différents modes propres de vibration, et principalement au moins un mode propre de vibration de structure (principalement mode propre de vibration de son bâti porteur), et également des modes propres de vibration de différentes sous parties de l'aiguilleteuse, telle que par exemple de sa ligne d'arbre pour l'entraînement des ensembles d'aiguilletage.

Pour une aiguilleteuse donnée, le ou les différents modes de vibration (type de mode et fréquence du mode) sont connus. Ils peuvent avoir été déterminés de manière connue en soi par des méthodes de calcul d'éléments finis et/ou avoir été caractérisés expérimentalement.

Les aiguilleteuses, dont le ou les ensembles d'aiguilletage sont supportés par une ou plusieurs poutres porteuses en appui à leurs extrémités, seront généralement caractérisées par un mode propre de flexion. Certaines aiguilleteuses peuvent également avoir des modes de torsion.

En cours d'aiguilletage, une aiguilleteuse est soumise à deux types d'efforts dynamiques.

Le premier type d'efforts est généré par la cinématique de l'aiguilleteuse. Dans la plupart des aiguilleteuses, le ou les ensembles d'aiguilles sont animés d'un mouvement d'aiguilletage alternatif au moyen de systèmes de type bielle manivelle, entraînés par un moteur. Ces efforts varient de manière pseudo-sinusoïdale à des fréquences multiples de la vitesse de rotation du moteur.

Le second type d'efforts est généré par l'aiguilletage. Ces efforts apparaissent à la fréquence de frappe de l'aiguilleteuse sous la forme de chocs répétitifs.

Ces deux types d'efforts dynamiques sont susceptibles d'exciter un ou plusieurs modes propres de vibration de l'aiguilleteuse. Il en résulte que pour certaines vitesses d'aiguilletage, on génère des vibrations d'amplitude importante, qui sont assimilables à une résonance mécanique et qui sont susceptibles d'endommager gravement l'aiguilleteuse.

Pour résoudre ces problèmes vibratoires de résonance, deux solutions techniques sont mises en oeuvre par les constructeurs d'aiguilleteuses.

La première solution technique consiste à limiter la plage d'utilisation de l'aiguilleteuse en interdisant des plages de vitesses d'aiguilletage critiques, qui se traduisent par une excitation d'un mode propre de vibration de l'aiguilleteuse.

La deuxième solution technique consiste à rigidifier la structure de l'aiguilleteuse, en sorte de placer la fréquence de chaque mode propre de vibration de l'aiguilleteuse à des valeurs élevées supérieures aux fréquences d'excitations des efforts mécaniques précités.

Ces deux solutions techniques ne sont toutefois pas satisfaisantes. La première solution technique (plages de vitesse d'aiguilletage interdites) conduit à limiter les possibilités de production de l'aiguilleteuse. La deuxième solution (rigidification de la structure) d'une part entraîne des surcoûts de fabrication ; d'autre part il n'est pas toujours possible techniquement de suffisamment rigidifier la structure de l'aiguilleteuse.

### Objectifs de l'invention

La présente invention a pour objectif principal de proposer une nouvelle solution technique aux problèmes de comportement vibratoire d'une aiguilleteuse en cours de fonctionnement ; cette solution permet de faire fonctionner l'aiguilleteuse en évitant les problèmes de résonance, mais à la différence de la première solution technique précitée, sans interdire de plages de vitesse d'aiguilletage, et pour un coût de mise en oeuvre inférieur à la deuxième solution précitée de rigidification de la structure.

Un autre objectif de l'invention est de proposer une nouvelle solution technique aux problèmes de comportement vibratoire d'une aiguilleteuse, qui peut non seulement être mise en oeuvre lors de la fabrication d'une aiguilleteuse, mais qui peut également être adaptée sur des aiguilleteuses existantes.

### Résumé de l'invention

La solution de l'invention repose d'une manière générale sur la mise en oeuvre de moyens de réglage de la fréquence d'au moins un mode propre de vibration de l'aiguilleteuse en fonction de la vitesse d'aiguilletage souhaitée.

L'invention a ainsi pour premier objet un procédé de réglage d'une aiguilleteuse, en vue d'une utilisation de cette aiguilleteuse à une vitesse d'aiguilletage prédéfinie excitant au moins un mode propre de vibration de l'aiguilleteuse. Selon l'invention, on règle la fréquence dudit mode propre de vibration de l'aiguilleteuse en fonction de ladite vitesse d'aiguilletage.

Ce réglage est effectué de manière à réduire l'amplitude des vibrations de l'aiguilleteuse en cours d'aiguilletage.

Selon le cas, ce réglage peut être effectué manuellement par l'utilisateur de l'aiguilleteuse, ou peut être effectué de manière automatique, par exemple au moyen d'un logiciel de contrôle de l'aiguilleteuse.

L'invention a également pour objet une aiguilleteuse comportant au moins un ensemble d'aiguilles mobile, et présentant au moins un mode propre de vibration susceptible d'être excité. De manière caractéristique selon l'invention, l'aiguilleteuse comporte des moyens de réglage de la fréquence dudit mode propre de vibration.

De préférence, mais non nécessairement, l'aiguilleteuse de l'invention comporte les caractéristiques additionnelles ci-après, prises isolement ou en combinaison les unes avec les autres :
- les moyens de réglage sont conçus pour permettre un réglage de la fréquence du mode propre de vibration à une valeur sélectionnée parmi au moins deux valeurs différentes (Fp ; F'p) prédéfinies, lesdites valeurs de fréquence (Fp ; F'p) étant choisies en sorte de permettre un fonctionnement de l'aiguilleteuse à n'importe quelle vitesse sur une plage de vitesses d'aiguilletage prédéfinie ;
- les moyens de réglage sont conçus pour modifier la masse du bâti de l'aiguilleteuse ;
- les moyens de réglage comportent une masse, et des moyens de liaison de cette masse au bâti de l'aiguilleteuse, lesquels moyens de liaison sont actionnables dans au moins deux configurations de réglage : (a) une configuration dans laquelle la masse est reliée rigidement au bâti de l'aiguilleteuse ; (b) une configuration dans laquelle la masse est isolée du bâti de l'aiguilleteuse ou est reliée élastiquement au bâti ;
- lesdits moyens de liaison comportent des moyens élastiques de raideur prédéfinie interposés entre la masse et le bâti de l'aiguilleteuse ;
- lesdits moyens élastiques comportent un ou plusieurs ressorts ;
- lesdits moyens de liaison comportent au moins une colonne fixe associée à un moyeu hydraulique qui est solidaire de la masse ;
- les moyens de réglage sont conçus pour modifier la raideur du bâti de l'aiguilleteuse ;
- les moyens de réglage permettent un réglage de la fréquence d'un mode propre de flexion du bâti de l'aiguilleteuse ;
- les moyens de réglage permettent un réglage de la fréquence d'un mode propre de torsion du bâti de l'aiguilleteuse ;
- l'aiguilleteuse comporte au moins une ligne d'arbre, des moyens d'entraînement en rotation de la ligne d'arbre, et des moyens de réglage de la fréquence d'un mode propre de torsion de la ligne d'arbre ;
- lesdits moyens de réglage de la fréquence d'un mode propre de torsion de la ligne d'arbre sont conçus pour modifier l'inertie de rotation de la ligne d'arbre ;
- lesdits moyens de réglage moyens de réglage de la fréquence d'un mode propre de torsion de la ligne d'arbre comportent un volant d'inertie monté en bout de la ligne d'arbre, et des moyens de couplage en rotation du volant d'inertie avec la ligne d'arbre, lesquels moyens de couplage sont débrayables.

### Brève description des dessins

D'autres caractéristiques et avantages de l'invention apparaîtront plus clairement à la lecture de la description détaillée ci-après de plusieurs variantes préférées de réalisation de l'invention, laquelle description est donnée à titre d'exemple non limitatif et non exhaustif de l'invention, et en référence aux dessins annexés sur lesquels :
- la figure 1 est une vue schématique de face d'une aiguilleteuse simple frappe comportant des moyens permettant un réglage de la fréquence d'un mode propre de flexion de l'aiguilleteuse, et réalisés conformément à une première variante de réalisation (modification de la masse du bâti porteur de l'aiguilleteuse),
- la figure 2 est une vue en coupe de détail des moyens de réglage précités de l'aiguilleteuse de la figure1,
- la figure 3 représente de manière schématique une aiguilleteuse simple frappe comportant des moyens permettant un réglage de la fréquence d'un mode propre de flexion de l'aiguilleteuse, et réalisés conformément à une deuxième variante de réalisation (modification de la raideur du bâti porteur de l'aiguilleteuse),
- la figure 4 représente de manière schématique une aiguilleteuse double frappe comportant des moyens de réglage d'un mode propre de torsion de l'aiguilleteuse, et
- la figure 5 représente de manière schématique une ligne d'arbre d'une aiguilleteuse équipée de moyens de réglage de la fréquence d'un mode propre de torsion de ladite ligne d'arbre.

### Description détaillée

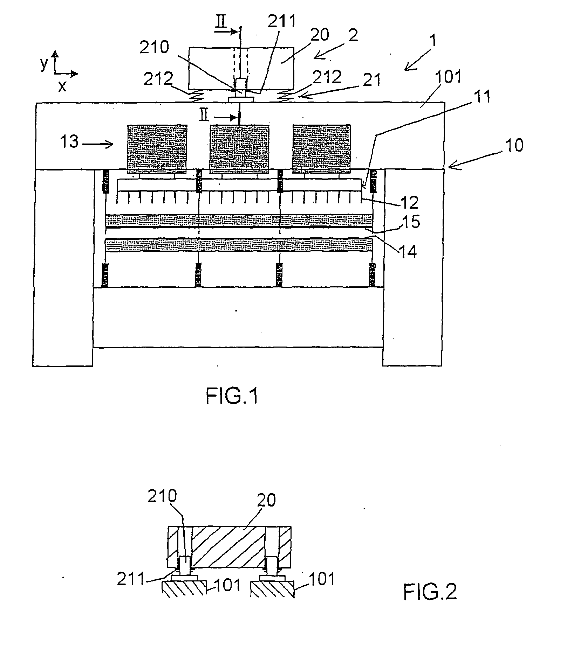

On a représenté sur la figure 1 une aiguilleteuse 1 simple frappe qui est utilisée pour aiguilleter tout type de produit fibreux non-tissé, et par exemple pour aiguilleter une nappe de non-tissé délivrée en amont de l'aiguilleteuse par un étaleur-nappeur

Cette aiguilleteuse 1 est équipée de moyens de réglage 2, qui sont spécifiques de l'invention.

### Aiguilleteuse (1)

La structure et le fonctionnement de l'aiguilleteuse 1 sont connus et sont par conséquent décrits succinctement ci-après.

L'aiguilleteuse 1 comporte un bâti porteur 10 de type mécano soudé en acier supportant :
- un ensemble d'aiguilletage 11 comportant une pluralité d'aiguilles 12 verticales,
- des moyens d'entraînement 13 motorisés (par exemple moteur associé à un ensemble de type bielle-manivelle) qui permettent de déplacer l'ensemble d'aiguilletage 11, selon un mouvement alternatif vertical,
- deux plaques perforées en acier 14 et 15 horizontales et espacées, dont les perforations sont alignées verticalement avec les aiguilles 12, et qui forment respectivement la plaque d'aiguilletage et la plaque de débourrage de l'aiguilleteuse 1.

L'invention n'est pas limitée à une aiguilleteuse comportant respectivement une table d'aiguilletage et une plaque de débourrage réalisées au moyen de plaques perforées 14 et 15, lesdites plaques perforées 14 et 15 pouvant en effet être remplacées par des moyens équivalents remplissant les mêmes fonctions respectivement de support d'aiguilletage et de débourrage. Par exemple, on peut remplacer la plaque d'aiguilletage 14 perforée par un support d'aiguilletage réalisé au moyen de brosses ou de lamelles.

Le produit fibreux à aiguilleter (non représenté sur les figures) est positionné entre les plaques d'aiguilletage 14 et de débourrage 15. En cours d'aiguilletage, l'ensemble d'aiguilletage 11 est déplacé en translation verticale alternativement vers le bas (pénétration des aiguilles dans le produit fibreux) et vers le haut (retrait des aiguilles). La vitesse de rotation du moteur commandant le déplacement vertical de l'ensemble d'aiguilletage 11 fixe la vitesse d'aiguilletage du produit fibreux.

### Mode(s) propre(s) de vibration

En fonctionnement, l'aiguilleteuse 1 est soumise à deux types d'efforts dynamiques.

D'une part il y a les efforts dynamiques générés par la cinématique de l'ensemble d'aiguilletage 11 et de leurs moyens d'entraînement 13. Ces efforts varient de manière pseudo-sinusoïdale à des fréquences multiples de la vitesse de rotation du moteur des moyens d'entraînement 13.

D'autre part, il y a les efforts dynamiques qui sont générés par l'aiguilletage, et qui apparaissent à la fréquence de frappe de l'aiguilleteuse 1 sous forme de chocs mécaniques répétitifs.

Ces deux types d'efforts sont tous deux susceptibles d'exciter des modes propres de vibration de l'aiguilleteuse 1.

En particulier, dans l'exemple de la structure de bâti porteur 10 de la figure 1, ces efforts dynamiques en cours d'aiguilletage sont susceptibles d'exciter principalement un mode propre de flexion verticale du bâti porteur 10 dans le plan longitudinal (XY).

Dans la suite de la description, pour l'aiguilleteuse 1 de la figure 1, on s'intéressera principalement à ce mode propre de flexion du bâti porteur 10 de l'aiguilleteuse 1, car ce mode propre particulier est en pratique le plus important compte tenu de la structure particulière de l'aiguilleteuse 1. II convient néanmoins de souligner que d'autres modes propres de vibration de l'aiguilleteuse 1 peuvent également être excités, et que l'invention peut également être appliquée pour régler la fréquence d'autres modes propres de vibration de l'aiguilleteuse (par exemple modes propres de torsion ou modes propres combinés du bâti porteur ou d'un autre élément ou ensemble d'éléments de l'aiguilleteuse).

Lorsque la fréquence d'excitation des efforts dynamiques précités est égale, ou suffisamment proche de la fréquence du mode propre de flexion de l'aiguilleteuse 1, il y a un risque important que les amplitudes de flexion du bâti porteur dans le plan vertical (XY) soient amplifiées par ladite excitation et aboutissent à une réponse vibratoire de l'aiguilleteuse qui est assimilable à une résonance. Or il est primordial d'éviter un tel comportement vibratoire du bâti porteur 10 de l'aiguilleteuse, sous peine de risquer un endommagement grave de l'aiguilleteuse 1.

### Moyens de réglage (2)

Les moyens de réglage 2 de l'aiguilleteuse 1 permettent d'éviter ces problèmes de réponse vibratoire du bâti porteur 10.

D'une manière générale, les moyens de réglage 2 permettent de prendre en compte la vitesse d'aiguilletage souhaitée et, en fonction de cette vitesse d'aiguilletage, d'ajuster le cas échéant la fréquence du mode propre de flexion de l'aiguilleteuse 1, de telle sorte que cette fréquence propre soit suffisamment éloignée de la fréquence d'excitation des efforts dynamiques auxquels est soumise l'aiguilleteuse, pour éviter une amplification préjudiciable de la réponse vibratoire en flexion du bâti porteur 10.

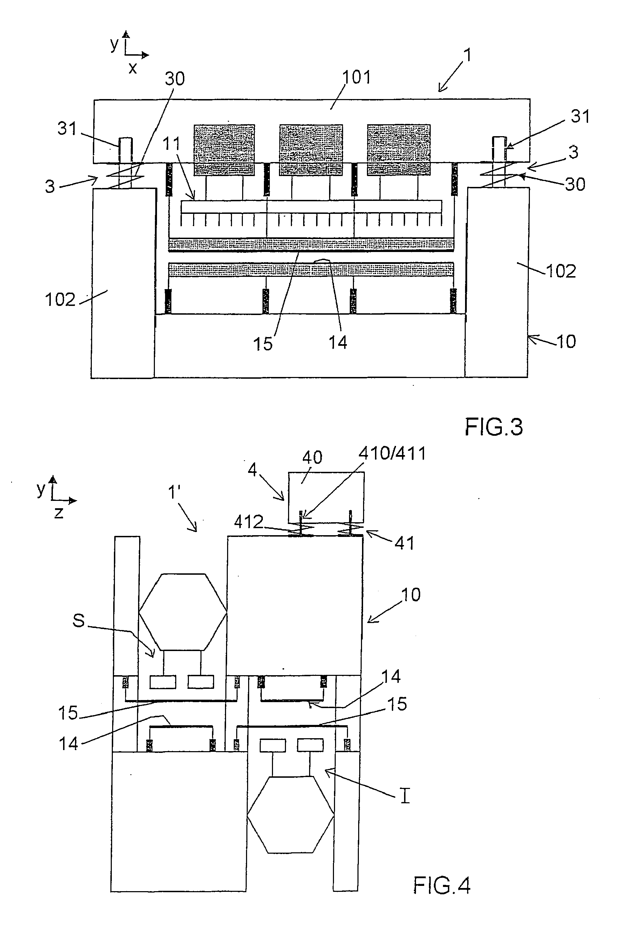

Plus particulièrement, dans la variante particulière de réalisation des figures 1 et 2, les moyens de réglage 2 permettent de régler la fréquence du mode propre de flexion de l'aiguilleteuse 1, par modification de la masse de l'aiguilleteuse 1. Ce principe de réglage de la fréquence propre de l'aiguilleteuse n'est toutefois pas limitatif de l'invention. Dans une autre variante de réalisation de l'invention, telle que celle décrite par exemple ci-après en référence à la figure 3, les moyens de réglage 2 peuvent être conçus pour régler la fréquence du mode propre de flexion de l'aiguilleteuse 1, en permettant une modification de la raideur de la structure de l'aiguilleteuse.

Egalement, de manière particulière et non limitative de l'invention, dans la variante particulière de réalisation des figures 1 et 2, les moyens de réglage 2 permettent de régler la fréquence du mode propre de flexion de l'aiguilleteuse 1 uniquement à deux valeurs distinctes. Ceci n'est toutefois pas limitatif de l'invention. Dans une autre variante de réalisation de l'invention, les moyens de réglage 2 peuvent être conçus pour régler la fréquence du mode propre de flexion de l'aiguilleteuse 1 à un plus grand nombre de valeurs.

En référence aux figures 1 et 2, les moyens de réglage 2 comportent une masse 20, qui est montée sur les deux poutres supérieures 101 du bâti porteur 10, par l'intermédiaire de moyens de liaison 21.

Plus particulièrement, les moyens de liaison 21 comportent :
- deux ensembles colonne 210/moyeu hydraulique 211, une colonne 210 étant fixée sur une poutre 101 du bâti porteur et le moyeu 211 coaxial associé étant solidaire de la masse 20 et apte à coulisser verticalement par rapport à la colonne 210, et
- plusieurs ressorts 212 verticaux qui sont interposés entre la masse 20 et le bâti porteur 10.

Les moyeux hydrauliques 211 sont alimentés en huile au moyen d'un système d'alimentation commandé, par exemple, par voie pneumatique.

Les moyeux 211 permettent, en fonction de la pression d'huile réglée au moyen du système d'alimentation :
(a) soit de coupler les deux colonnes 210 avec la masse 20 ; dans ce cas, la masse 20 est reliée rigidement au bâti porteur 10 ;
(b) soit de découpler les deux colonnes 210 de la masse 20 ; dans ce cas, la masse 20 est supportée par le bâti porteur 10 par l'intermédiaire des ressorts 212, et peut osciller verticalement par rapport au bâti porteur 10.

La raideur des ressorts 212 est choisie de manière à ce que la fréquence du mode de pompage de la masse 20 sur ces ressorts 212 est bien inférieure à la fréquence du mode propre de flexion de la structure de l'aiguilleteuse (par exemple fréquence du mode de pompage inférieur à 10 Hz).

Ainsi tant que la masse 20 est liée au bâti porteur 10 de l'aiguilleteuse 1 uniquement par l'intermédiaire des ressorts 212 [réglage (b) précité], le mode de pompage de la masse 20 et le mode de flexion de la structure de l'aiguilleteuse sont découplés. Il en résulte dans ce cas que l'ajout de la masse 20 sur les ressorts 212 ne change que très faiblement la fréquence du mode propre de flexion de la structure de l'aiguilleteuse 1.

En revanche, lorsque les deux colonnes 210 sont couplées à la masse 20 [réglage (a) précité], la masse 20 étant reliée rigidement au bâti porteur 10 de l'aiguilleteuse, on diminue significativement la fréquence du mode propre de flexion de l'aiguilleteuse, d'une valeur dépendant notamment du poids de la masse 20.

### Exemple de mise en oeuvre des moyens de réglage (2)

Dans un exemple particulier de réalisation, non limitatif de l'invention, on suppose que :
- le mode propre de flexion du bâti porteur 10 de l'aiguilleteuse 1, avec la masse 20 non couplée aux colonnes 210 et reposant sur les ressorts 212 [réglage (b) précité] présente une fréquence propre Fp valant environ 57 Hz, et
- le mode propre de flexion du bâti porteur 10 de l'aiguilleteuse 1 avec la masse couplée aux colonnes 210 et reliée rigidement au bâti porteur 10 [réglage (a) précité] présente une fréquence propre F'p valant environ 49 Hz.

Ces fréquences propres Fp et F'p peuvent avoir été déterminées de manière connue en soi par des méthodes de calcul d'éléments finis et/ou avoir été caractérisées expérimentalement.

Le décalage Δ entre les fréquences propres (Δ=Fp- F'p) dépend du poids de la masse 20, mais également de sa position sur le bâti porteur. De préférence, mais non nécessairement, tel que cela est illustré sur les figures 1 et 2, la masse 20 est centrée sur le bâti porteur 10, ce qui permet avantageusement d'obtenir un décalage Δ de fréquences propres du mode de flexion verticale avec une masse de poids plus faible, comparativement à une solution dans laquelle la position de la masse 20 ne serait pas centrée mais serait décalée selon l'axe longitudinale (Y) du bâti porteur.

Le décalage de la fréquence du mode propre de flexion obtenu grâce au découplage de la masse 20 [réglage (b) ] est suffisant, dans cet exemple particulier, pour qu'il n'y ait pas de chevauchement entre les plages dangereuses obtenues avec la masse couplée [réglage (a)] et avec la masse découplée [réglage (b)]. Ainsi, l'aiguilleteuse est avantageusement utilisable sur toute sa gamme de vitesses, sans risque d'endommagement de sa structure, en choisissant de manière approprié le réglage (a) ou le réglage (b), en fonction de la vitesse de frappe de l'aiguilleteuse.

Selon la variante de réalisation de l'invention, le choix entre le réglage (a) ou le réglage (b) peut être fait manuellement par l'utilisateur, ou être réalisé automatiquement par un logiciel de contrôle pilotant les moyens de réglage 2.

Dans le cas d'une mise en oeuvre automatique, le logiciel de contrôle est par exemple paramétré avec les plages de vitesses dangereuses spécifiques de chacun des deux réglage (a) et (b), et a par exemple pour variable d'entrée une consigne de vitesse d'aiguilletage qui est entrée par l'utilisateur de l'aiguilleteuse. Dans ce cas, le logiciel de contrôle est conçu pour choisir automatiquement le réglage approprié (a) ou (b) en fonction de cette consigne et des plages de vitesses dangereuses paramétrées, et pour piloter automatiquement les moyens de réglage 2. Dans une autre variante de réalisation, on peut également détecter les vibrations ou les efforts dynamiques subis par la structure de l'aiguilleteuse, et le logiciel de contrôle pilote automatiquement les moyens de réglage 2 en fonction de ces vibrations ou efforts détectés.

Dans l'exemple particulier précité, la valeur du décalage Δ de fréquence obtenu entre les deux modes de réglage (a) ou (b) vaut 8Hz. D'une manière plus générale, la valeur de ce décalage Δ entre les fréquences propres est de préférence choisi le plus faible possible afin de limiter le poids de la masse 20, mais doit être supérieur à la bande de fréquences autour de la fréquence de résonance de l'aiguilleteuse, dans laquelle les amplifications des vibrations sont dommageables pour la structure de l'aiguilleteuse.

L'invention n'est pas limitée à la structure particulière des moyens de réglage 2 des figures 1 et 2 qui viennent d'être décrits. Les moyens de réglage 2 peuvent être réalisés à l'aide de tout système mécanique permettant un réglage manuel ou automatique de la fréquence du mode propre de flexion de l'aiguilleteuse 1 à une valeur choisie parmi au moins deux valeurs distinctes (Fp, F'p).

Les moyens de réglage 2 décrits précédemment possèdent deux positions de fonctionnement [réglage (a) et réglage (b)], correspondant chacun une valeur de réglage (F'p ou Fp) de la fréquence propre du mode de flexion verticale de la structure de l'aiguilleteuse. Dans d'autres variantes, le nombre de valeurs de réglage de la fréquence propre peut être supérieur à 2, par exemple en prévoyant plusieurs masses 20. Egalement, dans une autre variante, les moyens de réglage 2 peuvent être conçus pour obtenir un décalage continu ou quasi-continu de la fréquence propre du mode vibratoire.

Dans le cas de la mise en oeuvre d'un système de réglage comportant au moins une masse 20 additionnelle, les ressorts 212 peuvent être remplacés par tout moyen équivalent permettant, lorsque ce moyen est actionné, de découpler les vibrations de la masse 20 et les vibrations du bâti de l'aiguilleteuse. Les ressorts 212 peuvent également être remplacés par un système non couplé mécaniquement au bâti porteur 10 et permettant une reprise temporaire de la charge de la masse 20.

### Moyens (3) de réglage de la raideur

Le réglage de la fréquence du mode propre de flexion peut également être obtenu au moyen d'un système mécanique permettant de modifier la raideur du bâti porteur.

A titre d'exemple, on a représenté de manière schématique sur la figure 3 , une aiguilleteuse 1 équipée de moyens 3 permettant un réglage de la raideur du bâti porteur 10. Dans cet exemple, les moyens de réglage 3 comportent :
- des éléments 30 qui présentent une raideur importante, et qui sont interposés entre les poutres supérieures 101 et les flancs latéraux 102 du bâti 10, et qui en fonctionnement permettent une transmission des efforts d'aiguilletage ; ces éléments sont par exemple des ressorts, des cales en caoutchouc, etc...
- pour chaque élément 30, un système de bridage 31 qui, lorsqu'il est actionné, permet d'obtenir entre la poutre supérieure 101 et les flancs latéraux 102 du bâti 10, une liaison mécanique dont la raideur est supérieure à celle de l'élément 30 associé ; par exemple, le système de bridage 31 peut comporter un moyeu hydraulique, un bras de levier,...

### Moyens (4) de réglage de la fréquence d'un mode propre de torsion

On a représenté de manière schématique sur la figure 4 une aiguilleteuse 1' à double frappe comportant un ensemble d'aiguilletage supérieur S et un ensemble d'aiguilletage inférieur I , qui sont décalés selon l'axe transversal Z de l'aiguilleteuse.

En fonctionnement, ce type d'aiguilleteuse présente au moins un mode propre de torsion dans le plan vertical transversal (XZ).

Cette aiguilleteuse comporte des moyens 4 de réglage de la fréquence dudit mode propre de torsion. Ces moyens de réglage 4 présentent la même structure (masse 40 supportée par le bâti porteur de l'aiguilleteuse par l'intermédiaire de moyens de liaison 41 comportant des ressorts 412 ou équivalent et deux ensembles : colonne 410/moyeu 411) et le même fonctionnement que les moyens de réglage 2 de l'aiguilleteuse 1 des figures 1 et 2. La seule différence réside dans le positionnement par rapport au bâti porteur de l'aiguilleteuse 1', de la masse 40 desdits moyens de réglage 4.

### Réglage de la fréquence d'au moins un mode propre de torsion d'une ligne d'arbre

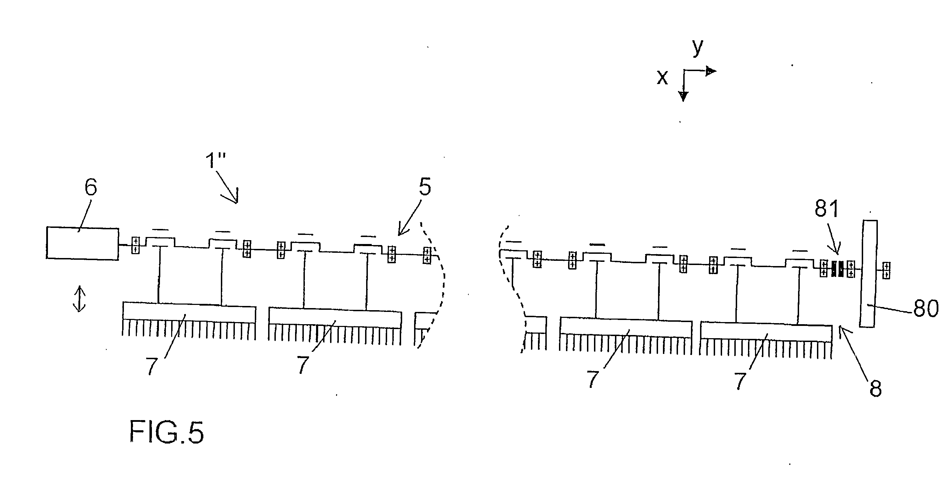

On a représenté de manière schématique sur la figure 5, une aiguilleteuse 1" comportant une ligne d'arbre 5, entraînée par un moteur 6 et utilisée pour permettre le mouvement alternatif vertical de plusieurs modules d'aiguilletage 7. En fonctionnement, cette ligne d'arbre 5 présente au moins un mode propre de torsion qui est susceptible d'être excité. Il en résulte que certaines plages de vitesses d'aiguilletage sont interdites sous peine de risquer d'endommager la ligne d'arbre 5, les efforts dynamiques dans ces plages interdites provoquant des amplitudes de torsion trop importantes de la ligne d'arbre 5.

Pour pallier ce problème, on équipe aiguilleteuse 1" avec des moyens 8 de réglage du mode propre de torsion de la ligne d'arbre 5. Ces moyens 8 permettent un réglage de l'inertie de rotation de la ligne d'arbre 5.

Plus particulièrement, dans la variante de la figure 5, ces moyens de réglage 8 comportent un volant d'inertie 80 monté en bout de la ligne d'arbre 5 et un moyen mécanique 81, qui est interposé entre ce volant d'inertie 80 et la ligne d'arbre 5, qui permet un couplage en rotation du volant d'inertie 80 et de la ligne d'arbre 5, et qui est débrayable en sorte de pouvoir le cas échéant désaccoupler en rotation le volant d'inertie 80 et la ligne d'arbre.

Lorsque le moyen de couplage en rotation 81 est débrayé, le volant d'inertie 80 n'est pas entraîné en rotation par la ligne d'arbre 5, et la ligne d'arbre 5 présente une un mode propre de torsion ayant une fréquence Fp prédéfinie.

Lorsque le moyen de couplage en rotation 81 est embrayé, le volant d'inertie 80 est couplé en rotation à la ligne d'arbre 5, et l'ensemble ligne d'arbre 5 / volant d'inertie 80 présente un mode propre de torsion ayant une fréquence F'p prédéfinie et inférieure à la fréquence Fp précitée.

En fonction de la vitesse d'aiguilletage choisie, l'utilisateur de l'aiguilleteuse 1" sélectionne la position de réglage adaptée à cette vitesse (couplage ou non en rotation du volant d'inertie 80 avec la ligne d'arbre 5).

L'invention n'est pas limitée aux exemples préférés de réalisation qui viennent d'être décrits en référence aux figures annexées. En particulier l'invention n'est pas limitée aux seules structures particulières de bâti porteur des figures annexées, mais peut s'appliquer à tout type de structure d'aiguilleteuse.

## Revendications

1. Procédé de réglage d'une aiguilleteuse (1 ;1' ;1"), en vue d'une utilisation de cette aiguilleteuse à une vitesse d'aiguilletage prédéfinie excitant au moins un mode propre de vibration de l'aiguilleteuse, **caractérisé en ce qu'**on règle la fréquence dudit mode propre de vibration de l'aiguilleteuse en fonction de ladite vitesse d'aiguilletage.

2. Procédé selon la revendication 1, **caractérisé en ce que** qu'on règle la fréquence dudit mode propre de vibration de l'aiguilleteuse à une valeur sélectionnée parmi au moins deux valeurs différentes (Fp ; F'p) prédéfinies, lesdites valeurs de fréquence (Fp ; F'p) étant choisies en sorte de permettre un fonctionnement de l'aiguilleteuse à n'importe quelle vitesse sur une plage de vitesses d'aiguilletage prédéfinie.

3. Aiguilleteuse (1 ;1' ;1") comportant au moins un ensemble d'aiguilles mobile, et présentant au moins un mode propre de vibration, **caractérisée en ce qu'**elle comporte des moyens (2 ; 3 ; 4 ; 8) de réglage de la fréquence dudit mode propre de vibration.

4. Aiguilleteuse selon la revendication 3, **caractérisée en que** les moyens de réglage (2 ; 3 ; 4 ; 8) sont conçus pour permettre un réglage de la fréquence du mode propre de vibration à une valeur sélectionnée parmi au moins deux valeurs différentes (Fp ; F'p) prédéfinies, lesdites valeurs de fréquence (Fp ; F'p) étant choisies en sorte de permettre un fonctionnement de l'aiguilleteuse à n'importe quelle vitesse sur une plage de vitesses d'aiguilletage prédéfinie.

5. Aiguilleteuse selon l'une des revendications 3 ou 4, **caractérisée en ce que** les moyens de réglage (2 ; 4) sont conçus pour modifier la masse du bâti (10) de l'aiguilleteuse.

6. Aiguilleteuse selon la revendication 5, **caractérisée en ce que** les moyens de réglage (2 ; 4) comportent une masse (20 ;40), et des moyens (21, 41) de liaison de cette masse au bâti (10) de l'aiguilleteuse, lesquels moyens de liaison (21, 41) sont actionnables dans au moins deux configurations de réglage : (a) une configuration dans laquelle la masse est reliée rigidement au bâti (10) de l'aiguilleteuse ; (b) une configuration dans laquelle la masse (20 ; 40) est isolée du bâti (10) de l'aiguilleteuse ou est reliée élastiquement au bâti (10).

7. Aiguilleteuse selon la revendication 6, **caractérisée en ce que** les moyens de liaison comportent des moyens élastiques (212,412) de raideur prédéfinie interposés entre la masse (20, 40) et le bâti (10) de l'aiguilleteuse.

8. Aiguilleteuse selon la revendication 7, **caractérisée en ce que** les moyens élastiques comportent un ou plusieurs ressorts (212 ; 412).

9. Aiguilleteuse selon l'une des revendications 6 à 8, **caractérisée en ce que** les moyens de liaison comportent au moins une colonne fixe (210/410) associée à un moyeu (211/411) hydraulique qui est solidaire de la masse (20/40).

10. Aiguilleteuse selon l'une des revendications 3 ou 4, **caractérisée en ce que** les moyens de réglage (3) sont conçus pour modifier la raideur du bâti (10) de l'aiguilleteuse.

11. Aiguilleteuse selon l'une des revendications 3 à 10, **caractérisée en ce que** les moyens de réglage (2 ; 3) permettent un réglage de la fréquence d'un mode propre de flexion du bâti (10) de l'aiguilleteuse.

12. Aiguilleteuse selon l'une des revendications 3 à 11, **caractérisée en ce que** les moyens de réglage (2 ; 3) permettent un réglage de la fréquence d'un mode propre de torsion du bâti (10) de l'aiguilleteuse.

13. Aiguilleteuse selon l'une des revendications 3 ou 4 , **caractérisée en ce qu'**elle comporte au moins une ligne d'arbre (5), des moyens (6) d'entraînement en rotation de la ligne d'arbre (5), et des moyens (8) de réglage de la fréquence d'un mode propre de torsion de la ligne d'arbre (5).

14. Aiguilleteuse selon la revendication 13, **caractérisée en ce que** les moyens de réglage (8) sont conçus pour modifier l'inertie de rotation de la ligne d'arbre (5).

15. Aiguilleteuse selon la revendication 14, **caractérisée en ce que** les moyens de réglage (8) comportent un volant d'inertie (80) monté en bout de la ligne d'arbre (5), et des moyens (81) de couplage en rotation du volant d'inertie (80) avec la ligne d'arbre (5), lesquels moyens de couplage (81) sont débrayables.
